# EUROPÄISCHE PATENTSCHRIFT

(11) **EP 1 500 531 B1**
(45) Veröffentlichungstag und Bekanntmachung des Hinweises auf die Patenterteilung: **12.10.2011**
(21) Anmeldenummer: 04016874.2
(22) Anmeldetag: 16.07.2004
(51) Int. Cl.: B60G 17/052, B60G 17/015, B60G 11/30, B60G 7/00, B60G 9/00, B60T 17/02, B60T 17/06, B60T 13/68, B60T 17/04

(54) **Anhänger- und Aufliegerbremsventil mit integrierter Ansteuerung der Luftfederung**
Trailer or semi-trailer brake valve with integrated control of the pneumatic suspension
Soupape de freinage pour une remorque ou semi-remorque à commande intégrée de la suspension pneumatique

(30) Priorität: 22.07.2003 DE 10333182
(43) Veröffentlichungstag der Anmeldung: 26.01.2005
(73) Patentinhaber: KNORR-BREMSE Systeme für Nutzfahrzeuge GmbH, 80809 München (DE); Daimler AG, 70327 Stuttgart (DE)
(72) Erfinder: Csak, Bence, 1124 Budapest (HU); Heilmann, Harro, Dr., 73760 Ostfildern (DE); Schwarzhaupt, Andreas, Dr., 76829 Landau (DE); Spiegelberg, Gernot, Dr., 71296 Heimsheim (DE); Sulzmann, Armin, Dr., 68723 Oftersheim (DE)
(74) Vertreter: Schönmann, Kurt

(56) Entgegenhaltungen:
- EP-A- 0 956 983
- WO-A-03/008249
- WO-A-03/008250
- DE-A- 10 143 888
- DE-A- 10 220 791
- DE-A- 19 835 638
- FR-A- 2 678 867
- US-A- 6 089 831
- US-B1- 6 398 236

## Beschreibung

Die Erfindung betrifft einen eineAchsanordnung eines Anhängers oder Aufliegers, welche eine Achse und einen Achsmodulator mit einem an eine Druckluftversorgung angeschlossenen Achssteuergerät umfasst, das ein erstes und ein zweites Ventil aufweist, wobei das erste Ventil eine Betriebsbremse und das zweite Ventil eine Luftfederung steuert, wobei eine Aufhängung der Achsanordnung und eine Ansteuerelektronik für den Achsmodulator vorgesehen ist, gemäß dem Oberbegriff von Anspruch 1.

Es ist bekannt, bei Anhängern oder Aufliegern die Betriebsbremsanlage als pneumatische Fremdkraftbremsanlage auszubilden, die auf Vorder-und Hinterachse des Anhängers wirkt. Betätigt der Fahrer im Zugfahrzeug die Betriebsbremsanlage oder die gestängelose Feststellbremsanlage, dann betätigen die durch Druckanstieg in der Bremsleitung übertragenen Bremsimpulse ein Anhängerbremsventil so, dass Druckluft aus einem Luftbehälter über einen Bremskraftregler in die Bremszylinder der Vorderachse und Hinterachse strömt. Der eingesteuerte Bremsdruck steht in einem bestimmten Verhältnis zum Steuerdruck in der Bremsleitung. Der über die Vorderachse mechanisch geregelte Bremskraftregler passt den Bremsdruck für Vorder- und Hinterachse des Anhängers automatisch der Achslast an.

Außerdem ist es bekannt, eine Luftfederung an den Achsen des Anhängers oder Aufliegers vorzusehen. Luftfederventile regeln die Luftmenge in den Luftfedern entsprechend der Beladung des Anhängers. Sie bewirken dadurch, dass der Abstand zwischen Anhängeraufbau und Fahrbahn unabhängig von der Beladung des Anhängers gleich bleibt. Die Luftfederung ist von der Bremsanlage des Anhängers beziehungsweise Aufliegers getrennt. Der einzige Berührungspunkt ist die gemeinsame Druckluftversorgung vom Zugfahrzeug über gemeinsam genutzte Druckluftbehälter.

In WO 03/008250 wird eine Druckluftaufbereitungsanlage für ein Zugfahrzeug beschrieben, welches an einem Grundkörper befestigbare Module für eine

Parkbremse und eine Luftfederung aufweist. Die Druckluftaufbereitungsanlage weist Druckausgänge für die Betriebsbremsen der Vorderachse und der Hinterachse auf und ist daher fahrzeug- und nicht achsbezogen.

Eine gattungsgemäße Achsanordnung ist aus der DE 101 43 888 A1 bekannt, wobei eine einerseits zur Steuerung einer Luftfederung und andererseits zur Steuerung von Radbremsen einer Achse vorgesehene Ventileinrichtung von einer gemeinsamen elektronischen Steuereinrichtung angesteuert wird.

Gemäß EP 1 031 730 A2 wird eine Vorrichtung zur Befestigung von pneumatischen und/oder elektropneumatischen Einrichtungen eines Fahrzeugs umfassend eine Montageplatte mit dieser Montageplatte an einem Querträger eines Fahrzeugrahmens befestigt.

Aufgabe der Erfindung ist es demgegenüber, eine bekannte Achsanordnung derart weiter zu bilden, dass sie einerseits möglichst einfach an einem Rahmen des Aufliegers oder Anhängers montiert werden kann und andererseits der Achsmodulator eine hohe Ausfallsicherheit gewährleistet.

Diese Aufgabe wird erfindungsgemäß durch die Merkmale von Anspruch 1 gelöst. Weiterführende und vorteilhafte Ausgestaltungen sind den Unteransprüchen und der Beschreibung zu entnehmen.

Dadurch, dass ein erstes und ein zweites Ventil in einem an eine Druckluftversorgung angeschlossenen Achssteuergerät eines Achsmodulators einer Achse vorgesehen sind, wobei das erste Ventil eine Betriebsbremse und das zweite Ventil eine Luftfederung steuert, wird ein hohes Maß an Integration erreicht. Dadurch werden weniger separate Bauteile benötigt, wodurch auch Kosten gespart werden. Der Anhänger beziehungsweise Auflieger kann unabhängig von der Zugmaschine, an die der Anhänger angehängt werden soll, hergestellt werden. Durch das Achssteuergerät kann sowohl die Betriebsbremse mit ABS-Funktion als auch die Luftfederung betrieben werden. Der Achsmodulator regelt den Druck in den Radbremseinrichtungen auf beiden Seiten der Achse. Vorteilhafterweise werden die Ventile des Achssteuergerätes elektronisch angesteuert. Durch diese Maßnahme müssen zum Auslösen der Betriebsbremse nur noch elektronische Impulse vom Zugfahrzeug übermittelt werden. Diese Ansteuerung ist zuverlässiger als die Ansteuerung mittels durch Druckanstieg in der Bremsleitung übertragener Bremsimpulse. Eine herkömmliche Bremsleitung kann somit entfallen. Eine elektronische Ansteuerung des zweiten Ventils für die Luftfederung erlaubt eine schnellere Reaktion auf die aktuellen Betriebsbedingungen des Anhängers bzw. Aufliegers.

Besonders bevorzugt ist es, wenn zur Regelung der Luftfederung Software in dem Achsmodulator angeordnet ist. Diese Maßnahme erlaubt es, die Software zusammen mit der Achse beziehungsweise dem Achsmodulator zu installieren. Die Installation eines zusätzlichen Speichers für die Software im oder am Anhänger ist nicht notwendig. Insbesondere kann sowohl die Software für die Regelung der Luftfederung als auch die Software zur Regelung des Antiblockiersystems (ABS) im Achsmodulator gespeichert sein. Dadurch wird zum einen eine weitere Integration der Bremsanlage und der Luftfederung erzielt. Zum anderen wird ein modulares System geschaffen, welches einfach montiert und ausgetauscht werden kann. Der Zusammenbau eines Anhängers wird dadurch beschleunigt.

Besonders vorteilhaft ist es, wenn jeder Achsanordnung ein vorbeschriebener Achsmodulator zugeordnet ist. Somit können die Betriebsbremse und die Luftfederung für jede Achsanordnung individuell angesteuert und geregelt werden. Ein derart integriertes Achssystem kann einfach und schnell am Rahmen eines Anhängers montiert und verkabelt werden.

Weiterhin ist eine Aufhängung der Achsanordnung vorgesehen, in der die Ansteuerelektronik für den Achsmodulator angeordnet ist. Erfindungsgemäß umfasst die Aufhängung einen hohlen U-Träger, in dem die Ansteuerelektronik angeordnet ist. Zum einen ist die Ansteuerelektronik auf diese Art und Weise geschützt gelagert. Zum anderen wird sie dadurch ohne zusätzlichen Montageaufwand zusammen mit der Achsanordnung am Anhänger bzw. Auflieger montiert.

Bei einer bevorzugten Ausführungsform der Erfindung ist eine mit der Ansteuerelektronik in Verbindung stehende erste Sensorik vorgesehen, die den aktuellen Federweg der gesamten Achse und/oder beider Radseiten getrennt erfasst. Der aktuelle Federweg wird als Regelgröße eingelesen. In Abhängigkeit von dem ermittelten Federweg kann das zweite Ventil für die Luftfederung angesteuert werden. Wenn der Federweg an beiden Radseiten erfasst wird, kann ein Wanken des Anhängers detektiert werden und durch entsprechende Ansteuerung des zweiten Ventils kann diesem Wanken entgegengewirkt werden.

Vorzugsweise ist eine zweite Sensorik zur Erfassung des Haftreibungsbeiwerts beider Räder der Achsanordnung vorgesehen, die mit der Ansteuerelektronik in Verbindung steht. Aufgrund der gemessenen Haftreibungsbeiwerte kann eine geeignete Ansteuerung des ersten Ventils erfolgen. Insbesondere kann die ABS-Bremsfunktion optimiert werden. Bei einem geringen Unterschied im Haftreibungsbeiwert zwischen dem rechten und dem linken Rad einer Achse wird der Bremsdruck auf das Rad mit dem höheren Haftungsniveau eingeregelt. Somit blockiert zwar das eine Rad, das andere Rad kann jedoch die volle Bremsleistung umsetzen. Auf diese Weise kann der Bremsweg verkürzt werden.

Ein sicheres Bremsen des Anhängers beziehungsweise des Aufliegers wird dadurch sichergestellt, dass die Druckluftversorgung der Achsanordnung einen Druckluftspeicher umfasst.

Besonders bevorzugt ist es, wenn der Druckluftspeicher im Inneren des Achskörpers der Achse angeordnet ist. Somit ist jeder Achse ein eigener Druckluftspeicher zugeordnet. Mit der Montage der Achse wird daher auch jeweils ein Druckluftspeicher montiert. Das Vorsehen eines Druckluftspeichers für jede Achse hat des Weiteren den Vorteil, dass die Achsen unabhängig voneinander gebremst und gefedert werden können und der Anhänger auch bei einem Ausfall der Druckluftversorgung zum Stillstand gebracht werden kann.

Bei einer besonders bevorzugten Ausführungsform ist ein Überströmventil mit begrenzter Rückströmung vorgesehen, über das der Druckluftspeicher an eine Druckversorgungsleitung angeschlossen ist. Durch diese Maßnahme können die einzelnen Achsen miteinander kommunizieren, da sie an einer gemeinsamen Versorgungsleitung angeschlossen sind. Das Überströmventil bewirkt jedoch, dass bei einem Druckabfall in der Versorgungsleitung ein zuverlässiges Bremsen des Anhängers noch möglich ist, da im Druckluftspeicher genügend Druckluft vorgehalten wird, um den Anhänger zum Stillstand bringen zu können.

Eine besonders gute Federung des Anhängers wird erreicht, wenn die Luftfederung für jedes Rad einen Federbalg umfasst. Somit kann die Federung für jede Seite einer Achse unabhängig eingestellt werden. Insbesondere kann durch diese Maßnahme einem Wanken des Anhängers entgegengewirkt werden.

Vorzugsweise sind Drucksensoren zur Erfassung des Innendrucks der Federbälge vorgesehen. Durch diese Maßnahme kann der Beladungszustand des Anhängers beziehungsweise Aufliegens detektiert werden. Zum anderen kann eine lastabhängige Bremskraftregelung realisiert werden.

Bei einer besonders bevorzugten Ausführungsform ist eine mit den Drucksensoren in Verbindung stehende Ventilanordnung vorgesehen, die bei zunehmendem Innendruck der Federbälge die Federbälge entlüftet und einem Liftbalg Druckluft zuführt. Diese Liftachsfunktion kann durch das zweite Ventil des Achssteuergeräts gesteuert werden. Mit abnehmendem Gewicht sinkt der notwendige Innendruck im Luftfederbalg. Ab einer vorgegebenen Schwelle wird das Anheben der Achse ausgelöst. Auf diese Weise kann ein konstanter Abstand des Rahmens des Aufliegens zum Boden realisiert werden. Beim Anheben der Achse wird der Luftdruck im Federbalg zur Entlüftung freigegeben und der Vorratsdruck in einen Liftbalg, der die Achse anhebt, zugeführt. Vorteilhafterweise umfasst die Ventilanordnung ein 4/2-Wege-Ventil.

Ausführungsbeispiele der Erfindung werden anhand einer Zeichnung näher erläutert.
Dabei zeigen:
Fig. 1 Schematisch einen Schaltplan einer Achsanordnung
Fig. 2 Ein Achssteuergerät eines Achsmodulators
Fig. 3 Schematisch die Aufhängung einer Achsanordnung

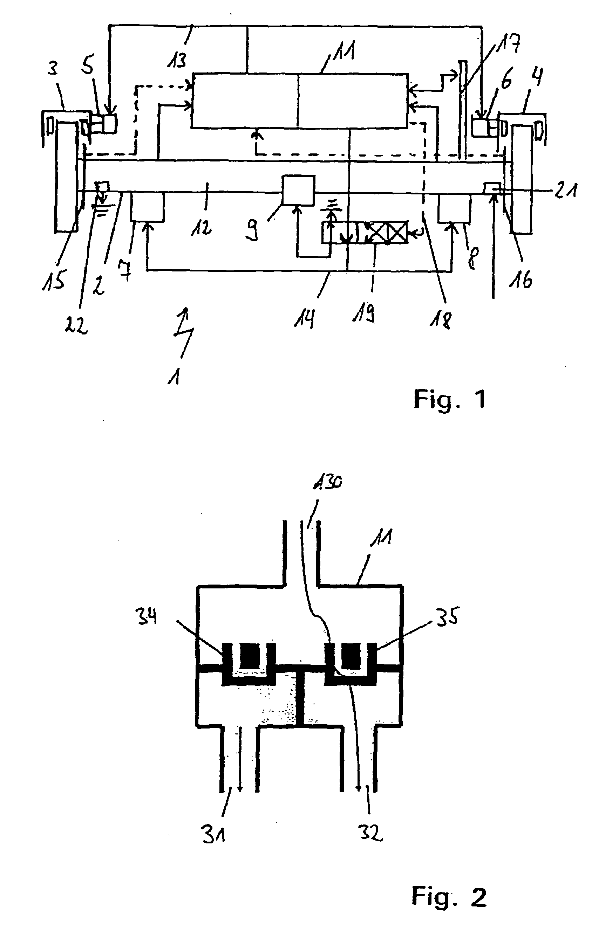

In der Figur 1 ist der Schaltplan einer Achsanordnung 1 eines Anhängers oder dgl. dargestellt. An einem Achskörper 2 befinden sich beidseitig Räder 3, 4, die über luftdruckbetriebene Radbremseinrichtungen 5, 6 gebremst werden können. Am Achskörper 2 ist für jede Radseite ein luftdruckbeaufschlagter Federbalg 7, 8 vorgesehen, der zur Federung dient. Weiterhin ist ein Liftbalg 9 vorgesehen, mit dem je nach Beladung des Anhängers der Achskörper 2 angehoben oder abgesenkt werden kann. Ein in einem Achsmodulator angeordnetes Achssteuergerät 11 wird durch einen im Achskörper 2 angeordneten Druckluftspeicher 12 mit Druckluft versorgt. Das Achssteuergerät 11 versorgt über die Bremsversorgungsleitung 13 die Radbremseinrichtungen 5, 6 und über die Federbalgversorgungsleitung 14 die Federbälge 7, 8 mit Druckluft. Das Achssteuergerät 11 steuert nicht nur die Betriebsbremse sondern auch das Antiblockiersystem (ABS). Dazu wird über Sensoren 15, 16 die Geschwindigkeit und der Haftreibungsbeiwert jedes Rades 3, 4 ermittelt. Bei einem geringen Unterschied im Haftreibungsbeiwert zwischen dem rechten und linken Rad 3, 4 einer Achse wird der Bremsdruck immer auf das Rad 3, 4 mit dem höheren Haftungsniveau eingeregelt. Somit wird das eine Rad 3, 4 zwar blockieren, auf dem anderen kann man so jedoch die volle Bremsleistung absetzen. Über den Ausgang des Achssteuergeräts 11 für die Luftfederung kann die Luftfederung und die Liftachsfunktion angesteuert und geregelt werden. Der Federweg der gesamten Achse oder für jedes Rad 3, 4 wird erfasst und als Regelgröße in eine Regeleinrichtung eingelesen. Wird der Federweg für beide Räder über entsprechende Sensoren 17 eingelesen, kann ein Wanken des Anhängers detektiert werden. Durch Messen des Drucks in den Federbälgen 7, 8 kann der Beladungszustand des Anhängers detektiert werden. Mit abnehmender Last sinkt der zur Federung notwendige Innendruck im Federbalg 7, 8. Ab einer vorgebbaren Schwelle wird das Anheben der Achse ausgelöst, indem der Schaltausgang des ASR - Abschaltventils 18 ein 4/2 - Wegeventil 19 einer Ventilanordnung ansteuert, welches den Luftdruck in dem oder den Federbälgen 7, 8 zur Entlüftung frei gibt und somit den Druck vom Ausgang des Achssteuergeräts 11 in den Liftbalg 9 führt, was ein Anheben der Achse bzw. des Achskörpers 2 bewirkt. Weiterhin kann durch Messen des Drucks in den Federbälgen 7, 8 über nicht dargestellte Drucksensoren eine lastabhängige Bremskraftregelung realisiert werden.

Der Druckluftspeicher 12 ist über ein Überströmventil 21 mit begrenzter Rückströmung an eine für alle Achsanordnungen gemeinsame Druckluftversorgung angeschlossen. Das Überströmventil 21 bewirkt, dass bei einem Druckabfall in der Druckluftversorgung der Druck im Druckluftspeicher 12 erhalten bleibt. Der Druckluftspeicher 12 verfügt über ein automatisches Entwässerungsventil 22.

In Figur 2 ist das Achssteuergerät 11 im Detail dargestellt. Es weist einen Eingang 30, mit dem es an die Druckluftversorgung angeschlossen ist, und einen ersten Ausgang 31 für die Betriebsbremse mit ABS-Funktion, sowie einen zweiten Ausgang 32 für die Luftfederung und Liftachsfunktion auf. Die Ausgabe der Druckluft wird über zwei elektronisch angesteuerte Ventile 34, 35 gesteuert. Für die elektronische Ansteuerung ist das Achssteuergerät mit einer Spannungsversorgung und einem Datenleitungsstrang verbunden. Das Achssteuergerät 11 ist in einem Achsmodulator angeordnet, das auch die Software enthalten kann, mit der unter Berücksichtigung des gemessenen Federwegs und Innendrucks der Federbälge die Steuerbefehle für das Ventil 35 ermittelt werden. Die Steuerbefehle für das Ventil 34 werden in Abhängigkeit des ermittelten Haftreibungsbeiwerts der Räder und des im Zugfahrzeug erzeugten Bremsdrucks ermittelt, wobei der Bremsdruck als proportionale elektronische Größe vom Zugfahrzeug übermittelt werden kann.

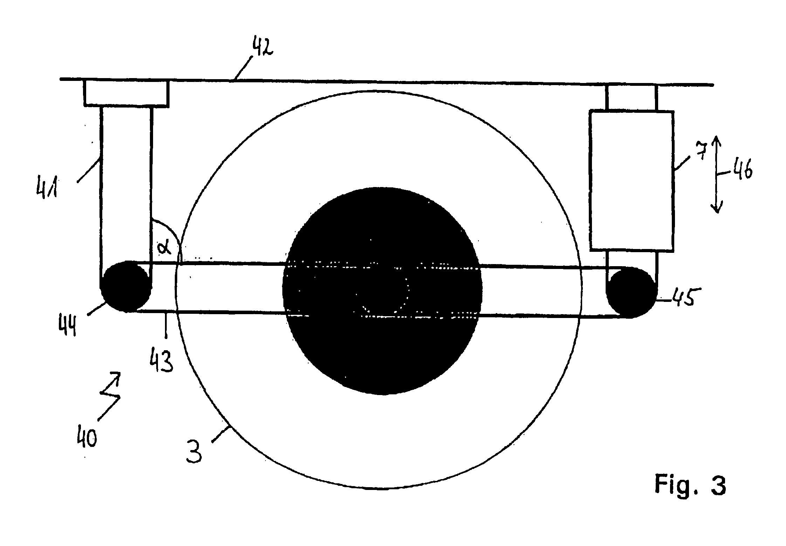

In der Fig. 3 ist stark schematisiert die Aufhängung 40 einer Achsanordnung dargestellt. Ein als hohler U-Träger ausgebildeter Träger 41 ist an einem Rahmen 42 eines Anhängers oder Aufliegers befestigt. Am freien Ende des Trägers 41 ist eine Radverstrebung 43 schwenkbar angeordnet. Die Radverstrebung 43 ist außerdem über einen Federbalg 7 mit dem Rahmen 42 verbunden. Während der Punkt 44 der Radverstrebung 43 ortsfest angeordnet ist, ist der gegenüberliegende Punkt 45 aufgrund der Luftfederung um den Punkt 44 schwenkbar angeordnet. An der Radverstrebung 43 ist ein Rad 3 angeordnet. Der Federweg der Luftfederung kann durch Messung des Winkels α zwischen Träger 41 und Radverstrebung 43 oder durch Messung der Länge des Federwegs 46 bestimmt werden. Die Ansteuerelektronik für den Achsmodulator ist in dem Träger 41 geschützt untergebracht.

Eine Achsanordnung 1 eines Anhängers oder Aufliegers umfasst ein Achsmodulator mit einem Achssteuergerät 11, in dem jeweils ein Ventil 34 für die Betriebsbremse und ein Ventil 35 für die Luftfederung angeordnet ist. Eine solche integrierte Anordnung vereinfacht den Aufbau und die Montage des Anhängers.

## Patentansprüche

1. Achsanordnung (1) eines Anhängers oder Aufliegers, welche eine Achse und einen Achsmodulator mit einem an eine Druckluftversorgung angeschlossenen Achssteuergerät (11) umfasst, das ein erstes und ein zweites Ventil (34, 35) aufweist, wobei das erste Ventil (34) eine Betriebsbremse und das zweite Ventil (35) eine Luftfederung steuert, wobei eine Aufhängung (40) der Achsanordnung (1) sowie eine Ansteuerelektronik für den Achsmodulator vorgesehen ist, **dadurch gekennzeichnet, dass** die Aufhängung (40) der Achsanordnung (1) einen an dem Rahmen (42) des Anhängers oder Aufliegers befestigten hohlen U-Träger (41) umfasst, in dem die Ansteuerelektronik für den Achsmodulator angeordnet ist.

2. Achsanordnung nach Anspruch 1, **dadurch gekennzeichnet, dass** die Ventile (34, 35) des Achssteuergeräts (11) elektronisch angesteuert sind.

3. Achsanordnung nach einem der vorhergehenden Ansprüche, **dadurch gekennzeichnet, dass** zur Regelung der Luftfederung Software in dem Achsmodulator angeordnet ist.

4. Achsanordnung nach einem der vorhergehenden Ansprüche, **dadurch gekennzeichnet, dass** eine mit der Ansteuerelektronik in Verbindung stehende erste Sensorik (17) vorgesehen ist, die den aktuellen Federweg des gesamten Achskörpers (2) und/oder beider Radseiten getrennt erfasst.

5. Achsanordnung nach Anspruch 4, **dadurch gekennzeichnet, dass** eine zweite Sensorik (15, 16) zur Erfassung des Haftreibungsbeiwerts beider Räder (3, 4) der Achsanordnung (1) vorgesehen ist, die mit der Ansteuerelektronik in Verbindung steht.

6. Achsanordnung nach einem der vorhergehenden Ansprüche, **dadurch gekennzeichnet**, die Druckluftversorgung einen Druckluftspeicher (12) umfasst.

7. Achsanordnung nach Anspruch 6, **dadurch gekennzeichnet, dass** der Druckluftspeicher im Inneren des Achskörpers (2) der Achsanordnung (1) angeordnet ist.

8. Achsanordnung nach einem der vorhergehenden Ansprüche, **dadurch gekennzeichnet, dass** ein Überströmventil (21) mit begrenzter Rückströmung vorgesehen ist, über das der Druckluftspeicher (12) an eine Druckversorgungsleitung angeschlossen ist.

9. Achsanordnung nach Anspruch einem der vorhergehenden Ansprüche, **dadurch gekennzeichnet, dass** die Luftfederung für jedes Rad (3, 4) einen Federbalg (7, 8) umfasst.

10. Achsanordnung nach Anspruch 9, **dadurch gekennzeichnet,**
**dass** Drucksensoren zur Erfassung des Innendrucks der Federbälge (7, 8) vorgesehen sind.

11. Achsanordnung nach Anspruch 10, **dadurch gekennzeichnet, dass** eine mit den Drucksensoren in Verbindung stehende Ventilanordnung (18, 19) vorgesehen ist, die bei zunehmendem Innendruck der Federbälge (7, 8) die Federbälge (7, 8) entlüftet und einem Liftbalg (9) Druckluft zuführt.

12. Anhänger oder Auflieger mit mindestens einer Achsanordnung (1) nach einem der vorhergehenden Ansprüche.

## Claims

1. Axle arrangement (1) of a trailer or semi-trailer, comprising an axle and an axle modulator with an axle controller (11) connected to a compressed-air supply system, which includes a first and a second valve (34, 35), whereof said first valve (34) controls a service brake whilst the second valve (35) controls a pneumatic suspension system, with a suspension system (40) of said axle arrangement (1) as well as an electronic control system being provided for said axle modulator, **characterized in that** said suspension system (40) of said axle arrangement (1) comprises a hollow U-support (4) fastened on the frame (42) of said trailer or semi-trailer, in which said electronic control system for said axle modulator is disposed.

2. Axle arrangement according to Claim 1, **characterized in that** said valves (34, 35) of said axle controller (11) are electronically controlled.

3. Axle arrangement according to any of the preceding Claims, **characterized in that** software is provided in said axle modulator for controlling the pneumatic suspension function.

4. Axle arrangement according to any of the preceding Claims, **characterized in that** a first sensor system (17) is provided which communicates with said electronic controller system and detects the current spring travel of the entire axle body (2) and/or both wheel sides separately.

5. Axle arrangement according to Claim 4, **characterized in that** a second sensor system (15, 16) is provided for detection of the coefficient of static friction of both wheels (3, 4) on said axle arrangement (1), which is connected to said electronic control system.

6. Axle arrangement according to any of the preceding Claims, **characterized in that** said compressed-air supply system includes a compressed-air reservoir (12).

7. Axle arrangement according to Claim 6, **characterized in that** said compressed-air reservoir is disposed inside said axle body (2) of said axle arrangement (1).

8. Axle arrangement according to any of the preceding Claims, **characterized in that** an overflow valve (21) with a limited return flow is provided via which said compressed-air reservoir (12) is connected to a compressed-air supply conduit.

9. Axle arrangement according to any of the preceding Claims, **characterized in that** said pneumatic suspension system for each wheel (3, 4) comprises resilient bellows (7, 8).

10. Axle arrangement according to Claim 9, **characterized in that** pressure gauges are provided for detection of the internal pressure in said resilient bellows (7, 8).

11. Axle arrangement according to Claim 10, **characterized in that** a valve system (18, 19) is provided in communication with said pressure gauges, which ventilates said resilient bellows (7, 8) as the internal pressure in said resilient bellows (7, 8) increases and supplies lifting bellows (9) with compressed air.

12. Trailer or semi-trailer comprising at least one axle arrangement according to any of the preceding Claims.

## Revendications

1. Arrangement d'essieu (1) d'une remorque ou semi-remorque, comprenant un essieu et un modulateur d'essieu avec un bloque contrôleur d'essieu (11) relié à un système d'alimentation en air comprimé, qui renferme une première et une deuxième soupapes (34, 35), dont la première soupape (34) commande un frein de service pendant que la deuxième soupape (35) commande un système de suspension pneumatique, à un système de suspension (40) dudit arrangement d'essieu (1) ainsi qu'un système de commande électronique étant disposé pour ledit modulateur d'essieu, **caractérisé en ce que** ledit système de suspension (40) dudit arrangement d'essieu (1) comprend un support creux en U (4) fixé au cadre (42) de ladite remorque ou semi-remorque, dans lequel ledit système de commande électronique pour ledit modulateur d'essieu est disposé.

2. Arrangement d'essieu selon la revendication 1, **caractérisé en ce que** lesdites soupapes (34, 35) dudit contrôleur des essieux (11) sont commandées par voie électronique.

3. Arrangement d'essieu selon une quelconque des revendications précédentes, **caractérisé en ce que** du logiciel est disposé dans ledit modulateur d'essieu afin de commander la fonction de suspension pneumatique.

4. Arrangement d'essieu selon une quelconque des revendications précédentes, **caractérisé en ce qu'**un premier système aux capteurs (17) est disposé, qui se trouve en communication avec ledit système contrôleur électronique et qui détecte le débattement courant de l'ensemble de corps d'essieu (2) et/ou des deux côtés de roues séparément.

5. Arrangement d'essieu selon la revendication 4, **caractérisé en ce qu'**un deuxième système aux capteurs (15, 16) est disposé pour la détection du coefficient d'adhérence pneu/route des deux roues (3, 4) audit arrangement d'essieu (1), qui est relié audit système de commande électronique.

6. Arrangement d'essieu selon une quelconque des revendications précédentes, **caractérisé en ce que** ledit système d'alimentation en air comprimé renferme un réservoir de l'air comprimé (12).

7. Arrangement d'essieu selon la revendication 6, **caractérisé en ce que** ledit réservoir de l'air comprimé est disposé à l'intérieur dudit corps d'essieu (2) dudit arrangement d'essieu (1).

8. Arrangement d'essieu selon une quelconque des revendications précédentes, **caractérisé en ce qu'**une soupape de décharge (21) à écoulement en retour limité est disposée, via laquelle ledit réservoir de l'air comprimé (12) est relié à un conduit d'alimentation en air comprimé.

9. Arrangement d'essieu selon une quelconque des revendications précédentes, **caractérisé en ce que** ledit système de suspension pneumatique pour chaque roue (3, 4) comprend un soufflet élastique (7, 8).

10. Arrangement d'essieu selon la revendication 9, **caractérisé en ce que** des détecteurs de pression sont disposés pour la détection de la pression intérieure dans ledit soufflet élastique (7, 8).

11. Arrangement d'essieu selon la revendication 10, **caractérisé en ce qu'**un système à soupapes (18, 19) est disposé en communication avec lesdits détecteurs de pression, qui assure l'aération dudit soufflet élastique (7, 8) pendant que la pression intérieure dans ledit soufflet élastique (7, 8) s'augmente et alimente un soufflet ascenseur (9) en air comprimé.

12. Remorque ou semi-remorque comprenant au moins un arrangement d'essieu selon une quelconque des revendications précédentes.
